# EUROPÄISCHE PATENTSCHRIFT

(11) **EP 1 275 570 B1**
(45) Veröffentlichungstag und Bekanntmachung des Hinweises auf die Patenterteilung: **25.01.2006**
(21) Anmeldenummer: 02014059.6
(22) Anmeldetag: 01.07.2002
(51) Int. Cl.: B60T 13/68

(54) **Bremsanlage mit elektropneumatischem Modulator**
Braking system with electro-pneumatic modulator
Système de freinage avec modulateur électro-pneumatique

(30) Priorität: 10.07.2001 DE 10133440
(43) Veröffentlichungstag der Anmeldung: 15.01.2003
(73) Patentinhaber: KNORR-BREMSE SYSTEME FÜR NUTZFAHRZEUGE GMBH, 80809 München (DE)
(72) Erfinder: Röther, Friedbert, 74389 Cleebronn (DE); Deja, Siegmund, 71691 Freiberg (DE)
(74) Vertreter: Mattusch, Gundula

(56) Entgegenhaltungen:
- EP-A- 0 088 911
- EP-A- 0 726 189
- DE-A- 3 205 228
- DE-A- 3 212 930

## Beschreibung

Die Erfindung betrifft ein elektropneumatisches Bremssystem für Kraftfahrzeuge mit einer mehrkreisigen Betriebsbremse, mit einem fußbetätigten Bremswertgeber zur pneumatischen und elektrischen Vorgabe des Bremsdrucksollwertes, wobei der Bremswertgeber an mindestens einem Bremskreis angeschlossen ist, der druckluftbetätigte Bremsen an mindestens zwei Fahrzeugachsen aufweist, mit mindestens einem elektrischen, sensorbeeinflussten Steuergerät und mit in Modulatoren zusammengefassten, elektromagnetischen Ventilen zur Regelung oder Steuerung der den Bremszylindern zugeführten Druckluft, wobei die Modulatoren den Bremsen die Druckluft im Normalfahrbetrieb elektrisch und im Notbetrieb pneumatisch zuteilen.

Aus der DE 40 03 122 A1 ist eine elektronisch geregelte Druckluftbremsanlage mit einer Steuerelektronik bekannt, die über im Normalfahrbetrieb elektrisch angesteuerte, an der Vorderachse und an der Hinterachse je Radseite zugeordnete elektropneumatische Wandler zur Verteilung und Zufuhr von Druckluft verfügt. Des weiteren sind zwei Bremskreise vorhanden, wobei einer dieser Bremskreise über einen fußbetätigten Bremswertgeber mit elektrischem Sollwertgeber und Betriebsbremsventil die radseitigen elektropneumatischen Wandler der Vorderachse und der Hinterachse mit Druckluft versorgen kann. Über eine Steuerung werden alle elektropneumatischen Wandler und zusätzliche 2/2 Wegeventile angesteuert.

Derartige Druckluftbremsanlagen weisen einen hohen Grad an vernetzten Druckluftleitungen auf, sowie eine aufwendige, durch die Vielzahl der verwendeten elektrischen Ventile ausgelegte elektronische Zentralsteuereinheit.

In der europäischen Patentanmeldung 0 088 911 A1 ist ein klassisch zweikreisiges Bremssystem dargestellt. Die Zweikreis-Druckmittelbremsanlage ist mit vor den Bremsen angeordneten Relaisventiten versehen. Jeder Bremskreis ist mit einer auch für den jeweils anderen Kreis wirksamen, übergreifenden Steuerung versehen und ein Primär-Bremskreis ist so ausgebildet, dass er alle zur optimalen Bremskraftanpassung bestimmten Steuerglieder aufweist, während ein Sekundär-Bremskreis lediglich ein steuergliedloser Hilfsbremskreis ist.

In der deutschen Offenlegungsschrift 32 05 228 ist eine Mehrkreisig-DruckmittelBremsanlage beschrieben, bei der ein Drucksteuerventil verwendet ist, das mehrkreisig ansteuerbar ist. Eine der Ansteuerungen erfolgt elektrisch und eilt gewöhnlich einer Druckmittel-Ansteuerung vor, sodass letztere bei intakter Anlage unwirksam bleibt.

Der vorliegenden Erfindung liegt daher die Problemstellung zugrunde, ein mit mindestens zwei getrennten pneumatischen Bremskreisen ausgestattetes Bremssystem mit wenigen Modulen und möglichst kurzen Druckluftwegen zu schaffen.

Diese Problemstellung wird mit den Merkmalen des Hauptanspruches gelöst. Dazu ist in mindestens einem elektropneumatischen Modulator eine Bremsregeleinheit angeordnet, in der mindestens ein erster und ein zweiter Bremskreis zusammengeführt sind. Diese Bremsregeleinheit versorgt an mindestens einer Fahrzeugachse beide Bremsen dieser Fahrzeugachse mit Druckluft. Im Gehäuse dieser Bremsregeleinheit sind mindestens zwei Kolben angeordnet, die den ersten vom zweiten Bremskreis pneumatisch voneinander trennen.

Im Normalfahrbetrieb versorgt ein erster Bremskreis direkt eine Bremsregeleinheit eines elektropneumatischen Modulators der Hinterachse mit Druckluft. Die Bremsregeleinheit des elektropneumatischen Modulators der Vorderachse wird Ober einen zweiten Bremskreis mit Druckluft versorgt. Bei einer Bremsung werden über einen elektrischen Sollwertgeber und eine zentralen Steuereinheit den Steuerelektroniken der elektropneumatischen Modulatoren entsprechende Steuersignale zugeleitet. Jeder Modulator verfügt über Anordnungen von Steuerventilen, die die - über diese Steuersignale - von den Bremskreisen bereitgestellte Druckluft über biegsame Leitungen an die Bremszylinder verteilt.

Der elektropneumatische Modulator der Hinterachse ist als geschlossene Baugruppe aus einer Steuerelektronik, zwei Anordnungen von Schaltventilen und zwei Bremsregeleinheiten mit Entlüftungen und Schalldämpfungen aufgebaut. Alle genannten Baugruppen sind über kürzeste pneumatische und elektrische Verbindungen direkt in einem Bauteil integriert. Die geschlossene Baugruppe des elektropneumatischen Modulators der Vorderachse setzt sich aus einer Steuerelektronik, einer Gruppe von Schaltventilen und einer Bremsregeleinheit zusammen. Da hier keine weiteren Ventile oder zusätzliche Steuer- bzw. Regeleinheiten notwendig sind, werden durch die kurzen pneumatischen und elektrischen Wege besonders kurze Reaktionszeiten erreicht. Die geringe Anzahl an Ventilen und Druckluftleitungen ermöglicht eine besonders leichte Handhabung bei der Montage und bei der Wartung.

Die Bremsregeleinheit der Vorderachse und eine Bremsregeleinheit der Hinterachse weisen zusätzlich je einen Druckluftanschluss des ersten Bremskreises auf. Diese Druckluftanschlüsse dienen im Notbetrieb über ein mechanisch betätigtes Betriebsventil der pneumatischen Steuerung der Bremsregeleinheiten. Normalerweise verfügen derartige elektropneumatische Bremssysteme bei Verwendung mehrerer Bremskreise immer über mindestens zwei getrennte Bremsregeleinheiten. Entgegen diesem Stand der Technik werden hier zwei getrennte Bremskreise in nur einer Bremsregeleinheit zusammengeführt.

Die Druckluft des ersten Bremskreises steuert in der Bremsregeleinheit über eine Anordnung von Ventilteilen die Druckluftversorgung der Bremszylinder Ober den zweiten Bremskreis. Bei der Zusammenführung beider Bremskreise in nur einer Bremsregeleinheit darf keine pneumatische Druckübertragung eines Bremskreises auf den anderen Bremskreis stattfinden. Die Trennung erfolgt mit Hilfe von mehreren einander beeinflussenden Kolben, die zum einen den Bremszylindern die Druckluft zuteilen und zum anderen Leckageluft ins Freie entlüften.

Durch die spezielle Anordnung dieser Kolben und anderen integrierten Schaltventilen können kurze elektrische und pneumatische Verbindungsleiturigen verwendet werden. Die Anordnung unterstützt gezielte, schnell wechselnde Druckluftschaltvorgänge, wie sie auch in ABS-Regelungen zur Anwendung kommen.

Weitere Einzelheiten der Erfindung ergeben sich aus den Unteransprüchen und der nachfolgenden Beschreibung einer schematisch dargestellten Ausführungsform.
- Figur 1:: Auszug aus dem Schaltplan einer Zweikreisbremsanlage,
- Figur 2:: elektropneumatischer Modulator zu Figur 1 mit dem Funktionsschema einer Bremsregeleinheit.

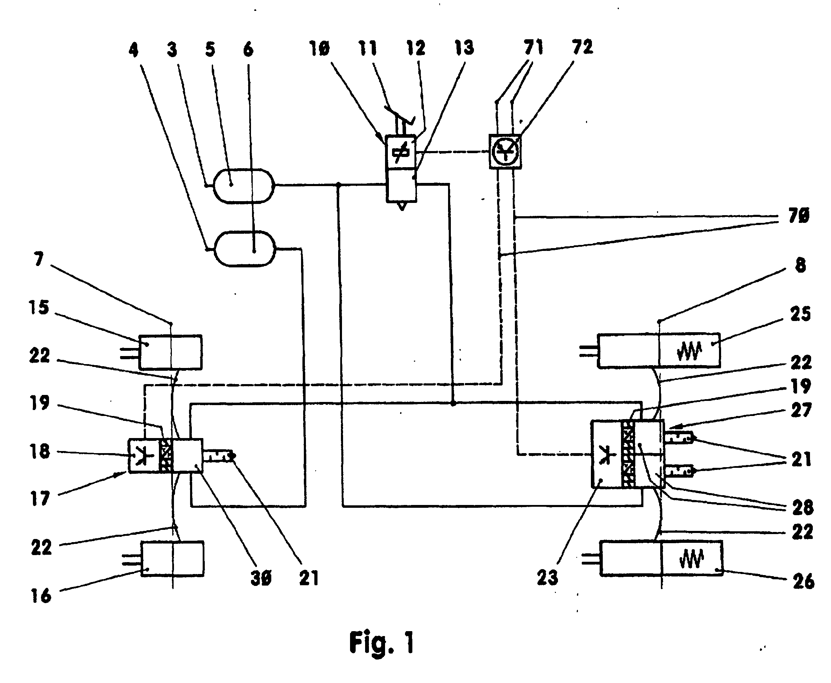

Figur 1 zeigt ein elektrisch pneumatisches Bremssystem mit einem elektropneumatischen Bremswertgeber (10) der mit einem Bremspedal (11), einem elektrischen Sollwertgeber (12) und einem Betriebsbremsventil (13) ausgestattet ist. Dem pneumatischen Eingang des Betriebsbremsventils (13) ist ein Vorratsbehälter (5) eines Bremskreises 1 (3) sowie eine Leitungsverzweigung zu einem Anschluss eines zweikreisigen elektropneumatischen Modulators (27) einer Hinterachse (8) vorgeschaltet. Der Ausgang des Betriebsbremsventils (13) verzweigt sich auf die jeweiligen Eingänge der elektropneumatischen Modulatoren (17) und (27). Der elektropneumatische Modulator (17) gehört zur Vorderachse (7).

Der Vorderachse (7) sind zwei Bremszylinder (15, 16) zugeordnet, die über biegsame Leitungen (22) mit dem elektropneumatischen Modulator (17) der Vorderachse (7) verbunden sind.

Bei dem elektropneumatischen Modulator (17) handelt es sich um eine einkanalige Ausführung, die sich aus den Baugruppen Bremsregeleinheit (30), einer Anordnung von Schaltventilen (19), einer Steuerelektronik (18) und einer Entlüftung mit Schalldämpfung (21) zusammensetzt. Die Bremsregeleinheit (30) ist über die Vorratsbehälter (5, 6) an zwei unabhängige Bremskreise 1 und 2 (3, 4) angeschlossen.

Zum Beispiel sind der Hinterachse (8) zwei Federspeicherbremszylinder (25, 26) zugeordnet, die über biegsame Leitungen (22) mit dem elektropneumatischen Modulator (27) der Hinterachse (8) verbunden sind. Der elektropneumatische Modulator (27) der Hinterachse (8) ist als zweikanalige Ausführung ausgelegt und setzt sich aus zwei Bremsregeleinheiten (28), zwei Anordnungen von Schaltventilen (19), einer gemeinsamen Steuerelektronik (23) sowie zwei Entlüftungen mit Schalldämpfungen (21) zusammen. Jede dieser Bremsregeleinheiten (28) ist mit dem Bremskreis 1 (3) verbunden, wobei eine dieser Bremsregeleinheiten (28) vor dem Bremswertgeber (10) mit dem Bremskreis 1 (3) verbunden ist während die andere Bremsregeleinheit (28) nach dem Bremswertgeber (10) mit dem Bremskreis 1 (3) in Verbindung steht.

Zwischen den Bremszylindern (15, 16) können zur assymmetrischen Druckverteilung Drucksteuerventile geschaltet werden. Diese Drucksteuerventile können im ABS-Betrieb den Bremsdruck in den beiden Bremszylindern (15, 16) assymmetrisch auf- und abbauen.

Einer zentralen Steuereinheit (72) werden über Sensoreingänge (71) elektrische Signale zugeleitet, die als Steuersignale Ober Steuerleitungen (70) zu den elektropneumatischen Modulatoren (17, 27) geleitet werden können.

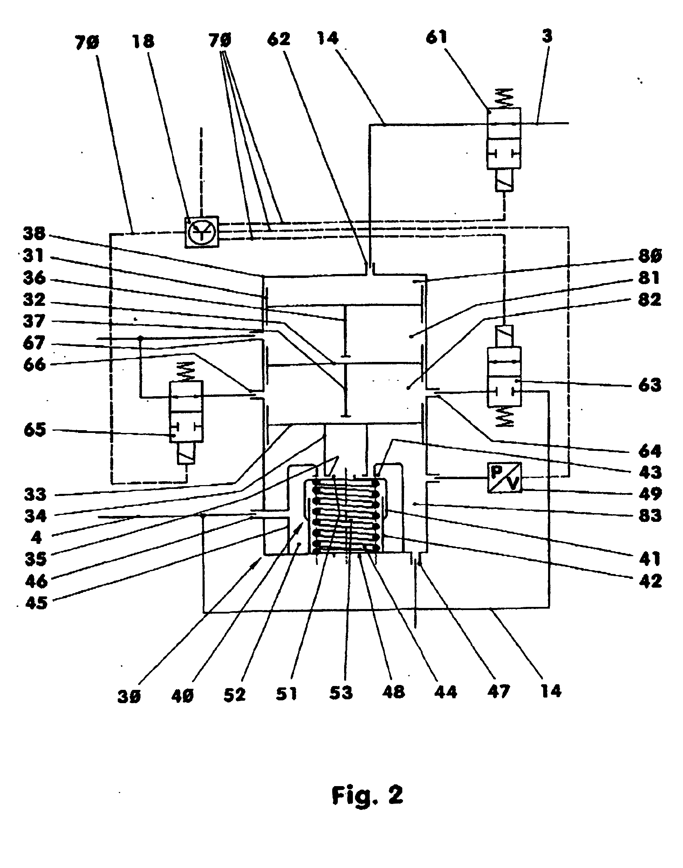

In Figur 2 ist unter anderem die schematische Darstellung des elektropneumatischen Modulators (17) mit der Bremsregeleinheit (30) mit den zugehörigen Schaltventilen und mit der Steuerelektronik (18) dargestellt.

Die Bremsregeleinheit (30) wird im wesentlichen von den Kolben (31, 32) und einem Relaisventil (40) gebildet Letzteres besteht im wesentlichen aus einem Steuerkolben (33) mit hohlzylindrischer Kolbenstange (34) und einer Manschette (41). Alle Kolben (31, 32, 33, 41) sind in Reihe angeordnet. Die Kolben (31, 32) weisen auf der dem Relaisventil (40) zugewandten Seite je eine Kolbenstange (36, 37) auf. Die hohlzylindrische Kolbenstange (34) des Steuerkolbens (33) ist am unteren Ende als Steuerkolbenventilsitz (35) ausgebildet. Die Manschette (41) hat z.B. die Form eines Topfes und weist an ihrem Boden eine Entlüftungsbohrung (51) auf. Innerhalb der Manschette (41) ist ein Führungszylinder (42) eingebaut, der die Manschette (41) am Gehäuse (38) der Bremsregeleinheit (30) führt und abstutzt. Unterhalb des Führungszylinders (42) befindet sich eine Entlüftungsöffnung (48) im Gehäuse (38) der Bremsregeleinheit (30).

Innerhalb des Führungszylinders (42) ist eine Ventilfeder (44) eingebaut, die zwischen dem Topfboden der Manschette (41) und dem Gehäuse (38) unter Vorspannung eingespannt ist.

Der Führungszylinder (42) und die Manschette (41) sind von einer z.B. ringförmigen Wandung (45) umgeben, die an einer ringförmigen Kontaktstelle zur Manschette (41) als Gehäuseventilsitz (43) ausgelegt ist. Zwischen der Wandung (45) und den Teilen (41) und (42) ist ein Ringraum (52) vorhanden. Über einen Anschluss (46) ist dieser Ringraum (52) mit dem Bremskreis 2 (4) verbunden.

Begrenzt durch die Wandung (45) des Gehäuses (38), den Steuerkolben (33) mit hohlzylindrischer Kolbenstange (34) ergibt sich der Kolbenraum (83). Letzterer hat über den Ausgang (47) eine pneumatische Verbindung zu den Bremszylindern (15, 16). Dem Kolbenraum (83) ist ein Drucksensor (49) zugeordnet, der über eine Steuerleitung (70) mit der Steuerelektronik (18) verbunden ist.

Zwischen den Kolben (32, 33) und dem Gehäuse (38) liegt ein Kolbenraum (82). Dieser ist über einen Anschluss (64), einem Einlassventil (63) in der Ausführung eines elektrisch angesteuerten 2/2 Wegeventils zugeordnet. Das Einlassventil (63) ist mittels einer Druckluftleitung (14) mit dem Bremskreis 2 (4) verbunden und kann durch eine Rückstellfeder in die Sperrstellung versetzt werden. Dem gleichen Kolbenraum (82) ist ein weiteres elektrisch angesteuertes 2/2 Wegeventil als Entlüftungsventil (65) über den Anschluss (66) zugeordnet. Dieses Entlüftungsventils (65) ist stromlos offen.

Der Kolbenraum (81), der durch die Kolben (31, 32) und dem Gehäuse (38) begrenzt wird, verfügt über einen permanent geöffneten Entlüftungsanschluss (67). Ein Kolbenraum (80), der durch den Kolben (31) und das Gehäuse (38) gebildet wird, ist Ober einen Anschluss (62) und eine Druckluftleitung (14) mit einem Back-up-Ventil (61) mit dem Bremskreis 1 (3) verbunden.

Das Back-up-Ventit (61) ist ein elektrisch ansteuerbares 2/2 Wegeventil mit Federrückstellung. Es ist im unbestromten Zustand auf Durchlass geschaltet. Alle elektropneumatisch betätigten 2/2 Wegeventile (61, 63, 65) sind über Steuerleitungen (70) mit der Steuerelektronik (18) verbunden.

Ggf. kann das Back-up-Ventil (61) entfallen, wenn die pneumatische Wirkfläche des Kolbens (32) größer ist als die des Kolbens (31).

Im Normalfahrbetrieb werden durch Betätigung des Bremspedals (11), vgl. Figur 1, über den elektrischen Sollwertgeber (12) elektrische Signale an die zentrale Steuereinheit (72) geleitet. Nach Aufbereitung dieser Signale werden von der zentralen Steuereinheit (72) Steuersignale an die Steuerelektroniken (18, 23) der elektropneumatischen Modulatoren (17, 27) geleitet, die entsprechend dieser Signale die Schaltventilanordnungen (19) ansteuem und somit die Bremsregeleinheiten (30, 28) zur Versorgung von Druckluft aus den Bremskreisen 1 und 2 (3, 4) für die Bremszylinder (15, 16, 25, 26) betätigen.

Die Steuerelektronik (18) steuert im Normalfahrbetrieb ― bei betätigtem Bremswertgeber (10) - das Back-up-Ventil (61) elektrisch über eine Steuerleitung (70) an und schaltet dieses dauerhaft auf Sperrung. Die Druckluftleitung (14) und der Kolbenraum (80) sind drucklos. Der Kolbenraum (81) wird ständig über den Entlüftungsanschluss (67) drucklos gehalten.

Durch den Bremskreis 2 (4) ist Ober den Anschluss (46) der Ringraum (52) permanent unter Druck gesetzt. Die Manschette (41) des Relaisventils (40) wird durch die Ventilfeder (44) dichtend gegen den Gehäuseventilsitz (43) gedrückt. Das Einlassventil (63) ist durch die Rückstellfeder gesperrt, so dass der ständig am Einlassventil (63) anliegende Bremsdruck des Bremskreises 2 (4) nicht in den Kolbenraum (82) geleitet werden kann. Durch einen im Normalfahrbetrieb ausgelösten Bremsvorgang erhält das Einlassventil (63) über die Steuerelektronik (18) und die Steueneitung (70) ein Schaltsignal, wodurch das Einlassventil (63) auf Durchfluss geschaltet wird. Über den Anschluss (64) wird der Kolbenraum (82) mit Druckluft gefüllt und verschiebt dadurch den Kolben (32) in Richtung des Kolben (31) bis beide Kolben (32, 31) sich durch Blockbildung in Richtung auf den Anschluss (62) bewegen. Durch die Entlüftung des Kolbenraums (81) und den drucklosen Kolbenraum (80) wird die Bewegung der beiden Kolben (32, 31) sichergestellt. Gleichzeitig wird auch der Steuerkolben (33) mit Druck beaufschlagt und in Richtung des Relaisventils (40) verschoben. Die hohlzylindrische Kolbenstange (34) des Steuerkolbens (33) trifft mit dem Steuerkolbenventilsitz (35) dichtend auf den Topfboden des Relaisventils (40) auf. Der Kolbenraum (83) ist über die Entlüftung (48) entlüftet. Der hierbei vom Steuerkolben (33), der hohlzylindrischen Kolbenstange (34), der Manschette (41) und dem Führungszylinder (42) eingeschlossene Raum (53) wird über die Entlüftung (48) drucklos gehalten.

Durch den im Kolbenraum (82) anstehenden Druck wird der Steuerkolben (33) mit seiner zylindrischen Kolbenstange (34) und der Manschette (41) gegen die Ventilfeder (44) in Richtung der Entlüftung (48) verschoben. Hierdurch gelangt der im Ringraum (52) anliegende Druck des Bremskreises 2 (4) über die geöffnete ringförmige Dichtstelte des Gehäuseventilsitzes (43) in den Kolbenraum (83 der pneumatisch mit den Bremszylindern (15, 16) verbunden ist. Während dieses Vorgangs ist das Entlüftungsventil (65) über die Steuerelektronik (18) auf Sperrung geschaltet.

Die vom Drucksensor (49) ermittelten Druckwerte werden über die Steuerleitung (70) der Steuerelektronik (18) zugeführt. Ein zu großer Bremsdruck im Kotbenraum (83) hätte ein Sperren des Einlassventils (63) zur Folge, während gleichzeitig das Entlüftungsventil (65) Ober die Steuerelektronik (18) stromfrei geschaltet wird. Die Rückstellfeder schaltet das Entlüftungsventil (65) auf Durchgang. Diese Schaltvorgänge können bei schwankenden Bremsdrücken einen in etwa gleich bleibenden Bremsdruck bewirken. Weiter besteht hierbei auch die Möglichkeit, durch gezielte schnell wechselnde Schaltvorgänge des Einlassventils (63) und des Entlüftungsventils (65) eine ABS-ähnliche Bremsregelung zu erzielen.

Bei einer Störung - z.B. Verlust der elektrischen Spannung - ist durch eine mechanische Betätigbarkeit des Betriebsbremsventils (13) ein Notbetrieb sicher gestellt, vgl. Figur 1. Die Bremsregeleinheit (30) des elektropneumatischen Modulators (17) wird über das Betriebsbremsventil (13) unter Nutzung der Druckluft des Bremskreises 1 (3) angesteuert, um den Bremskreis 2 (4) zur eigentlichen Versorgung von Bremsdruck für die Bremszylinder (15, 16) zu verbinden. Die Bremsregeleinheiten (28) des elektropneumatischen Modulators (27) werden beide zur Betätigung der Federspeicherbremszylinder (25, 26) über den Bremskreis 1 (3) mit Druckluft versorgt sowie über das Betriebsbremsventil (13) angesteuert.

Im Notbetrieb werden weder von der zentralen Steuereinheit (72) noch von der Steuerelektronik (18) Schaltsignale zur Ansteuerung der Steuerventitanordnungen (19) übertragen. In diesem Fall erfolgt die Ansteuerung der elektropneumatischen Modulatoren (17, 27) über das Betriebsbremsventil (13) das Druckluft des Bremskreises 1 (3) zu den Bremsregeleinheiten (30, 28) leitet.

Der Betriebsregeleinheit (30) ist ein Back-up-Ventil (61) vorgelagert das unbestromt auf Durchlass geschaltet ist. Es kann somit Druckluft des Bremskreises 1 (3) über den Anschluss (62) in den Kolbenraum (80) der Bremsregeleinheit (30) gelangen. Hierbei wird der Kolben (31) in Richtung des Relaisventils (40) verschoben bis dieser Kolben (31) mit seiner Kolbenstange (36) auf den Kolben (32) trifft. Der Kolbenraum (81) ist hierbei über den Entlüftungsanschluss (67) drucklos gehalten. Die nun auf Block befindlichen Kolben (31) und (32), die auch als ein einteilig ausgebildetes Bauteil ausführt sein können, bewegen sich nun gemeinsam auf das Relaisventil (40) zu, bis der Kolben (32) mit seiner Kolbenstange (37) auf den Steuerkolben (33) trifft. Der sich hierbei volumenmäßig verkleinemde Kolbenraum (82) wird nicht - wie im Normalfahrbetrieb - über das Einlassventil (63) mit dem Bremsdruck des Bremskreises 2 (4) beaufschlagt. Das Einlassventil (63) befindet sich im Notbetrieb durch seine Rückstellfeder in Sperrstellung. Damit sich die Kolben (31, 32) sicher verschieben lassen, ist der Kolbenraum (82)) über das mittels Rückstellfeder auf Durchlass geschaltete Entlüftungsventil (65) drucklos gehalten. Die Blockbildung der Kolben (31, 32, 33) und deren Kolbenstangen (36, 37) bewirken eine Verschiebung der hohlzylindrischen Kolbenstange (34) in Richtung der Manschette (41). Die hohlzylindrische Kolbenstange (34) verschließt hierbei über den Steuerkolbenventilsitz (35) den Kolbenraum (83) dichtend von der Entlüftung (48) ab und verschiebt im weiteren Verlauf die Manschette (41) aus seiner Sperrstellung.

In der Sperrstellung dichtet die Manschette (41), der über die Ventilfeder (44) in seiner Ruhelage gehalten wird, den über den Bremskreise 2 (4) druckbeauf schlagten Ringraum (52) am Gehäuseventilsitz (43) ab.

Der permanent im Ringraum (52) vorherrschende Bremsdruck des Bremskreises 2 (4) wird nun in den Kolbenraum (83) geleitet, von wo aus eine direkte Druckbeaufschlagung der Bremszylinder (15, 16) über die biegsamen Leitungen (22) erfolgt, vgl. Figur 1. Vor dem Bremsen sind die Bremszylinder (15, 16), die biegsamen Leitungen (22) und der Kolbenraum (83) über den geöffneten Steuerkolbenventilsitz (35) und der Entlüftung (48) drucklos gehalten. Der dem Kolbenraum (83) zugeordnete Drucksensor (49) ist im Notbetrieb ohne Funktion. Der elektropneumatische Modulator (17) ist mit nur einer Bremsregeleinheit (30) ausgestattet, die bei Notbetrieb von zwei getrennten Bremskreisen 1 und 2 (3,4) mit Bremsdruck beaufschlagt wird. Gesetzliche Sicherheitsbestimmungen sehen in einem solchen Fall eine Trennung beider Bremskreise 1 und 2 (3, 4) vor. Um eine pneumatische Trennung zu erreichen und somit eine mögliche Druckluftübertragung von einem Bremskreis auf den anderen Bremskreis zu verhindern ist in der Bremsregeleinheit (30) der Kolben (32) vorgesehen. Wenn Druck über den Bremskreis 1 (3) im Kolbenraum (80) anliegt und eventuelle Leckage in den Kolbenraum (81) gelangt, ist über den Entlüftungsanschluss (67) eine Entlüftung des Kolbenraums (81) sichergestellt. Der Kolben (32), der als ein - beide Bremskreise - trennendes Bauteil arbeitet, verhindert ein Überströmen in den Kolbenraum (82). Das gleiche Prinzip ist zur Trennung des Bremskreises 2 (4) vorgesehen, wenn über das Einlassventil (63) und dem Anschluss (64) Druckluft aus dem Bremskreis 2 (4) in den Kolbenraum (82) geleitet wird. In diesem Fall ist das Entlüftungsventil (65), das über den Anschluss (66) mit dem Kolbenraum (82) verbunden ist auf Sperrstellung geschaltet. Eine eventuell hierbei auftretende Leckage am Kolben (32) würden in gleicher Weise über den Entlüftungsanschluss (67) abgeleitet werden. Die Anordnung eines trennenden Kolbens (32) und eines Entlüftungsanschlusses (67) im Kolbenraum (81) ist zur sicheren Trennung beider Bremskreise 1 und 2 (3, 4) ausreichend, da entweder Druckluft im Kolbenraum (80) oder im Kolbenraum (82) anliegen kann. Durch die Verschaltung der Schaltventile (19) ist sichergestellt, dass sowohl im Normaffahrbetrieb wie auch im Notbetrieb niemals eine Druckbeaufschlagung beider Bremskreise 1 und 2 (3, 4) in den entsprechenden Kolbenräumen (80, 82) wirken kann.

### Bezugszeichenliste

- 3: Bremskreis 1
- 4: Bremskreis 2
- 5: Vorratsbehälter
- 6: Vorratsbehälter
- 7: Vorderachse
- 8: Hinterachse

- 10: Bremswertgeber
- 11: Bremspedal
- 12: elektrischer Sollwertgeber
- 13: Betriebsbremsventil
- 14: Druckluftleitung
- 15, 16: Bremszylinder
- 17: elektropneumatischer Modulator
- 18: Steuerelektronik
- 19: Schaltventile
- 21: Entlüfturtg mit Schalldämpfer
- 22: biegsame Leitung
- 23: Steuerelektronik

- 25, 26: Federspeicherbremszylinder, Kombibremszylinder
- 27: elektropneumatischer Modulator
- 28: Bremsregeleinheit

- 30: Bremsregeleinheit
- 31: Kolben
- 32: Kolben
- 33: Steuerkolben
- 34: hohlzylindrische Kolbenstange
- 35: Steuerkolben-Ventilsitz
- 36, 37: Kolbenstange
- 38: Gehäuse

- 40: Relaisventil
- 41: Manschette, Stellglied
- 42: Führungwylinder
- 43: Gehäuse-Ventilsitz
- 44: Ventilfeder
- 45: Wandung
- 46: Anschluss
- 47: Ausgang
- 48: Entlüftung
- 49: Drucksensor

- 51: Entlüftungsbohrung
- 52: Ringraum
- 53: Raum in (41.42)

- 61: Back-up-Ventil
- 62: Anschluss
- 63: Einlassventil
- 64: Anschluss
- 65: Entlüftungsventil
- 66: Anschluss
- 67: Entlüftungsanschluss

- 70: Steuerleitung
- 71: Sensoreingänge
- 72: zentrale Steuereinheit

- 80: Kolbenraum vor (31)
- 81: Kolbenraum vor (32)
- 82: Kolbenraum vor (33)
- 83: Kolbenraum nach (33)

## Patentansprüche

1. Elektropneumatisches Bremssystem für Kraftfahrzeuge mit einer mehrkreisigen Betriebsbremse, mit einem fußbetätigten Bremswertgeber (10) zur pneumatischen und elektrischen Vorgabe des Bremsdrucksollwertes, wobei der Bremswertgeber (10) an mindestens einem Bremskreis (3,4) angeschlossen ist, der druckluftbetätigte Bremsen an mindestens zwei Fahrzeugachsen aufweist, mit mindestens einem elektrischen, sensorbeeinflussten Steuergerät (72) und mit in Modulatoren (17) zusammengefassten, elektromagnetischen Ventilen zur Regelung oder Steuerung der den Bremszylindern (15, 16, 25, 26) zugeführten Druckluft, wobei die Modulatoren (17) den Bremsen die Druckluft im Normalfahrbetrieb elektrisch und im Notbetrieb pneumatisch zuteilen, **dadurch gekennzeichnet, dass** in mindestens einem elektropneumatischen Modulator (17) eine Bremsregeleinheit (30) angeordnet ist, in der mindestens ein erster und ein zweiter Bremskreis (3) und (4) zusammengeführt sind, dass die Bremsregeleinheit (30) in mindestens einer Fahrzeugachse beiden Bremsen dieser Fahrzeugachse die Druckluft zuteilt und dass in einem Gehäuse (38) in der Bremsregeleinheit (30) mindestens zwei Kolben (31, 32, 33) angeordnet sind, die den ersten (3) vom zweiten Bremskreis (4) pneumatisch trennen und dass im pneumatischen Notbetrieb die Kolben für den pneumatischen und elektropneumatischen Betrieb an einander anliegend en bloc verschoben werden.

2. Bremssystem gemäß Anspruch 1, **dadurch gekennzeichnet, dass** im Gehäuse (38) hintereinander ein erster Kolben (31), ein zweiter Kolben (32) und ein dritter Kolben (33) mit Abstand angeordnet und dichtend geführt sind, wobei die Kolben (31-33) über Kolbenstangen (36, 37) auf Abstand gehalten werden.

3. Bremssystem gemäß Anspruch 2, **dadurch gekennzeichnet, dass** am Ende der hintereinander angeordneten Kolben (31-33) ein Relaisventil (40) angeordnet ist, über das bei Betätigung Druckluft des zweiten Bremskreises (4) elektrisch gesteuert oder geregelt den Bremsen zugeteilt wird.

4. Bremssystem gemäß den Ansprüchen 2 und 3, **dadurch gekennzeichnet, dass** mindestens ein Kolben (31-33) das Relaisventil (40) betätigt, wobei der dritte Kolben (33) am Stellglied (41) des Relaisventils (40) anliegt.

5. Bremssystem gemäß den Ansprüchen 2 bis 4, **dadurch gekennzeichnet, dass** zwischen dem zweiten Kolben (32) und dem dritten Kolben (33) im Gehäuse (38) ein Druckluftanschluss (64) des zweiten Bremskreises (4) und ein Entlüftungsanschluss (66) angeordnet sind, wobei beide Anschlüsse (64, 66) unabhängig voneinander sperrbar sind.

6. Bremssystem gemäß den Ansprüchen 2 bis 5, **dadurch gekennzeichnet, dass** zwischen dem ersten Kolben (31) und dem zweiten Kolben (32) im Gehäuse (38) ein Entlüftungsanschluss (67) angeordnet ist.

7. Bremssystem gemäß den Ansprüchen 2 bis 4, **dadurch gekennzeichnet**, das der erste Kolben (31), auf seiner vom zweiten Kolben (32) abgewandten Seite, über einen sperrbaren Druckluftanschluss (62) mit Druckluft aus dem ersten, pneumatisch gesteuerten oder geregelten Bremskreis (3) beaufschlagbar ist.

8. Bremssystem gemäß den Ansprüchen 5 und 7, **dadurch gekennzeichnet, dass** der elektropneumatische Modulator (17) mindestens besteht aus der Bremsregeleinheit (30), aus den die Anschlüsse (62, 64, 66) sperrenden oder freigebenden Ventilen (61, 63, 65), aus einer Steuerelektronik (18) und aus einem Drucksensor (49).

9. Bremssystem gemäß Anspruch 1, **dadurch gekennzeichnet, dass** die Kolben (31) und (32) als ein einteilig Bauteil ausgebildet sind.

10. Bremssystem gemäß Anspruch 1, **dadurch gekennzeichnet, dass** der einen Kolbenraum (82) des elektropneumatischen Bremskreises (4) abschließende Kolben (32) eine größere pneumatische Wirkfläche aufweist als der einen Kolbenraum (80) des pneumatischen Bremskreis (3) abschließende Kolben (31).

## Claims

1. Electro-pneumatic braking system for motor vehicles, comprising a multi-circuit service brake, a pedal-operated brake-force value generator (10) for pneumatic and electric specification of the desired value of the braking pressure, with said brake-force value generator (10) being connected to at least one brake circuit (3, 4) that includes pneumatically operated brakes on at least two vehicle axles, with at least one electric sensor-influenced controller (72) and with electromagnetic valves combined in modulators (17) for feedback control or control of the compressed air supplied to the brake cylinders (15, 16, 25, 26), wherein said modulators (17) distribute the compressed air to the brakes electrically in a normal running condition and pneumatically in an emergency running condition, **characterised in that** a brake control unit (30) is disposed in at least one electro-pneumatic modulator (17), in which unit at least one first brake circuit (3) and one second brake circuit (4) are combined, that said brake control unit (30) distributes the compressed air in at least one vehicle axle to both brakes of this vehicle axle, and that at least two pistons (31, 32, 33) are disposed in a housing (38) in said brake control unit (30), which separate the first brake circuit (3) pneumatically from the second brake circuit (4), and that in pneumatic emergency operation, the pistons for the pneumatic and the electro-pneumatic operation are displaced en bloc in a side-by-side relationship.

2. Braking system according to Claim 1, **characterised in that** a first piston (31), a second piston (32) and a third piston (33) are disposed in said housing (38) in a spaced tandem relationship and are guided in a sealed condition, with the pistons (31 - 33) being maintained at a spacing via piston rods (36, 37).

3. Braking system according to Claim 2, **characterised in that** a relay valve (40) is disposed at the end of said pistons (31 - 33) in tandem arrangement, via which, upon operation, compressed air of said second brake circuit (4) is distributed to the brakes under electrical feedback control or control.

4. Braking system according to the Claims 2 and 3, **characterised in that** at least one piston (31 - 33) operates said relay valve (40), with said third piston (33) bearing against the actuator (41) of said relay valve (40).

5. Braking system according to the Claims 2 to 4, **characterised in that** a pneumatic port (64) of said second brake circuit (4) and a ventilation port (66) are disposed between said second piston (32) and said third piston (33) in said housing, with both ports (64, 66) being adapted for being blocked independently of each other.

6. Braking system according to the Claims 2 to 5, **characterised in that** a ventilation port (67) is disposed between said first piston (31) and said second piston (32) in said housing (38).

7. Braking system according to the Claims 2 to 4, **characterised in that** said first piston (31), on its side turned away from said second piston (32), is adapted to be acted upon by compressed air via a pneumatic port (62) adapted for blocking, from a first pneumatically controlled or regulated brake circuit (3).

8. Braking system according to the Claims 5 and 7, **characterised in that** said electro-pneumatic modulator (17) consists at least of said brake control unit (30), of the valves (61, 63, 65) blocking or releasing said ports (62, 264, 66), of an electronic control system (18) and of a pressure sensor (49).

9. Braking system according to Claim 1, **characterised in that** said pistons (31) and (32) are configured as an integral component.

10. Braking system according to Claim 1, **characterised in that** said piston (32) defining a piston chamber (82) of said electro-pneumatic brake circuit (4) presents a pneumatic effective area larger than that of the piston (31) defining a piston chamber (80) of said pneumatic brake circuit (3).

## Revendications

1. Système de freinage électropneumatique pour véhicules automobiles, comprenant un frein de service à plusieurs circuits, un générateur de la valeur d'effort de freinage, opéré par pédale, pour la prédétermination pneumatique et électrique de la valeur de consigne de la pression de freinage, audit générateur de la valeur d'effort de freinage (10) étant relié à au moins un circuit de freinage (3, 4) renfermant des freins à opération pneumatique à au moins deux axes de véhicule, à au moins une unité de commande électrique (72) sous l'influence des détecteurs, et comprenant des soupapes électromagnétiques combinées dans des modulateurs (17) pour le réglage ou la commande de l'air comprimé alimenté aux cylindres de freinage (15, 16, 25, 26), dans lequel lesdits modulateurs (17) distribuent l'air comprimé aux freins par voie électrique aux conditions de mouvement normales et par voie pneumatique à une condition de mouvement de secours, **caractérisé en ce qu'**une unité de commande de freinage (30) est disposé dans au moins un modulateur électropneumatique (17), dans laquelle au moins un premier circuit de freinage (3) et un deuxième circuit de freinage (4) sont combinés, **en ce que** ladite unité de commande de freinage (30) distribue l'air comprimé dans au moins une axe de véhicule aux deux freins de cet axe de véhicule, et **en ce qu'**au moins deux pistons (31, 32, 33) sont disposés dans un carter (38) dans ladite unité de commande de freinage (30), qui sépare le premier circuit de freinage (3) par voie pneumatique du deuxième circuit de freinage (4), et **en ce qu'**en opération pneumatique de secours, les pistons pour l'opération pneumatique et électropneumatique sont déplacés en bloc l'un à côté de l'autre.

2. Système de freinage selon la revendication 1, **caractérisé en ce qu'**un premier piston (31), un deuxième piston (32) et un troisième piston (33) sont disposés dans ledit carter (38) l'un derrière l'autre à un écart et sont guidés en état étanche, aux pistons (31 - 33) étant tenus à un écart via des tiges de piston (36, 37).

3. Système de freinage selon la revendication 2, **caractérisé en ce qu'**un soupape de relais (40) est disposé à l'extrémité desdits pistons (31 - 33) l'un derrière l'autre, via lequel, après sa commande, de l'air comprimé dudit circuit de freinage (4) est distribué aux freins sous réglage ou commande électrique.

4. Système de freinage selon les revendications 2 et 3, **caractérisé en ce qu'**au moins un piston (31 - 33) commande ledit soupape de relais (40), audit troisième piston (33) portant contre l'acteur (41) dudit soupape de relais (40).

5. Système de freinage selon les revendications 2 à 4, **caractérisé en ce qu'**un raccord pneumatique (64) dudit deuxième circuit de freinage (4) et un raccord d'aération (66) sont disposés entre ledit deuxième piston (32) et ledit troisième piston (33) dans ledit carter, auxdits deux raccords (64, 66) étant aptes à être bloqué l'un indépendamment de l'autre.

6. Système de freinage selon les revendications 2 à 5, **caractérisé en ce qu'**un raccord d'aération (67) est disposé entre ledit premier piston (31) et ledit deuxième piston (32) dans ledit carter (38).

7. Système de freinage selon les revendications 2 à 4, **caractérisé en ce que** ledit premier piston (31), du son côté opposé audit deuxième piston (32), est apte à être commandé par de l'air comprimé via un raccord pneumatique (62) apte à être bloqué, à partir d'un premier circuit de freinage (3) sous commande ou réglage pneumatique.

8. Système de freinage selon les revendications 5 et 7, **caractérisé en ce que** ledit modulateur électropneumatique (17) consiste au moins de ladite unité de commande de freinage (30), des soupapes (61, 63, 65), qui bloquent ou dégagent lesdits raccords (62, 64, 66), d'un système électronique de commande (18) et d'un détecteur de pression (49).

9. Système de freinage selon la revendication 1, **caractérisé en ce que** lesdits pistons (31) et (32) sont configurés sous forme d'un module intégral.

10. Système de freinage selon la revendication 1, **caractérisé en ce que** ledit piston (32) définissant une chambre à piston (82) dudit circuit de freinage électropneumatique (4) présente une aire pneumatique effective plus grande que l'aire du piston (31) définissant une chambre à piston (80) dudit circuit de freinage (3) pneumatique.
